# EUROPEAN PATENT APPLICATION

(11) **EP 4 787 319 A1**
(43) Date of publication of application: **05.08.2026**
(21) Application number: 24900838.4
(22) Date of filing: 23.10.2024
(51) Int. Cl.: G06T 11/60, G06T 7/11, G06T 7/13, G06T 5/20, G06N 3/0475, G06T 7/194

(54) **ELECTRONIC DEVICE AND IMAGE PROCESSING METHOD USING ELECTRONIC DEVICE**

(30) Priority: 07.12.2023 KR 20230176392; 07.06.2024 KR 20240074334
(71) Applicant: Samsung Electronics Co., Ltd., Suwon-si, Gyeonggi-do 16677 (KR)
(72) Inventor: MOON, Chankyoo, Suwon-si, Gyeonggi-do 16677 (KR); JEONG, Moonhwan, Suwon-si, Gyeonggi-do 16677 (KR); KIM, Gangseo, Suwon-si, Gyeonggi-do 16677 (KR); KIM, Sangtae, Suwon-si, Gyeonggi-do 16677 (KR); HUR, Youngjin, Suwon-si, Gyeonggi-do 16677 (KR)
(74) Representative: Nederlandsch Octrooibureau
(86) International application number: PCT/KR2024/016219
(87) International publication number: WO 2025/121650

(57) **Abstract**

An electronic device according to various embodiments of the present invention includes: a display; at least one processor; and a memory including one or more storage media storing instructions. The instructions may cause, when individually or integrally executed by the at least one processor, the electronic device to: display a first image including an object image area and a background image area through a user interface; receive an input for selecting the object image area included in a first image while the first image is displayed; identify an outline of the selected object image area on the basis of the input; generate a mask area related to the identified outline of the object image area; transform the generated mask area into another shape; and generate, through generative artificial intelligence (200), a second image obtained by changing the selected object image area to a back ground image area, on the basis of information related to the first image including the transformed mask area.

## Description

### [Technical Field]

Various embodiments of the disclosure set forth an electronic device and a method of processing an image using the electronic device.

### [Background Art]

The use of electronic devices of various types, such as a bar type, a foldable type, a roller type, or a sliding type, is increasing, and various functions are being provided to electronic devices.

The electronic device may capture an image or a video using one or more cameras.

The electronic device may display an image or a video captured using the camera on a display module.

The information described above may be provided as background art (related art) to assist in understanding the disclosure. No claim or determination as to whether any of the above-described contents may be applied as prior art in relation to the disclosure is made.

### [Disclosure of Invention]

### [Technical Problem]

An electronic device may perform installation of at least one application and perform various functions. For example, the electronic device may provide a function of editing an image captured through a camera using a specific application.

The electronic device may provide various images edited from an original image by using a generative artificial intelligence (AI). For example, when a user of the electronic device deletes an object image region (e.g., a specific object) in an image, the generative AI may newly generate another object instead of the deleted object image region (e.g., the specific object).

For example, when a user of the electronic device wants to delete only the object image region (e.g., the specific object) from the image, the generative AI may generate another unnecessary object having a similar shape to the object image region (e.g., the specific object) in the region in which the object image region (e.g., the specific object) is deleted. In the case in which the electronic device provides an image including an unnecessary object by using the generative AI, the user may not acquire an image that the user desires.

Various embodiments of the disclosure may provide an electronic device and an image processing method using the electronic device, which, when an object image region (e.g., a specific object) is deleted from an image, may prevent a generative artificial intelligence from generating another image in a region where the object image region is deleted.

Various embodiments of the disclosure may provide an electronic device and an image processing method using the electronic device, which, when a user wants to delete an object image region (e.g., a specific object) in an image, transforms a mask region related to the deleted object image region such that a generative artificial intelligence is incapable of estimating or predicting a shape (e.g., an outline or boundary) of the deleted object image region.

The technical task to be accomplished in the disclosure is not limited to the technical tasks mentioned above, and other technical tasks which have not been mentioned will become apparent to those skilled in the art from the following description.

### [Solution to Problem]

An electronic device according to an embodiment of the disclosure may include a display, at least one processor, and a memory including one or more storage media storing instructions. According to an embodiment, the instructions may, when executed by the at least one processor individually or collectively, cause the electronic device to: display a first image including an object image region and a background image region through a user interface; while the first image is displayed, receive an input for selecting the object image region included in the first image; based on the input, identify an outline of the selected object image region; generate a mask region related to the identified outline of the object image region; transform the generated mask region to have a different outline; and based on information related to the first image including the transformed mask region, generate, through a generative artificial intelligence, a second image in which the selected object image region is changed to the background image region.

A method of processing an image using an electronic device according to an embodiment of the disclosure may include an operation of displaying a first image including an object image region and a background image region through a user interface. According to an embodiment, the method may include an operation of, while the first image is displayed, receiving an input for selecting the object image region included in the first image. According to an embodiment, the method may include an operation of, based on the input, identifying an outline of the selected object image region. According to an embodiment, the method may include an operation of generating a mask region related to the identified outline of the object image region. According to an embodiment, the method may include an operation of transforming the generated mask region to have a different outline. According to an embodiment, the method may include an operation of, based on information related to the first image including the transformed mask region, generating, through the generative artificial intelligence, a second image in which the selected object image region is changed to the background image region.

According to an embodiment, the method of processing an image using the electronic device may be performed by using a non-transitory computer-readable storage medium storing one or more programs. The one or more programs according to an embodiment may include instructions and/or commands to be performed when executed by a processor of the electronic device.

### [Advantageous Effects of Invention]

According to various embodiments of the disclosure, when a user deletes an object image region (e.g., a specific object) in an image, a generative artificial intelligence may be prevented from generating a new another image in a region in which the object image region is deleted, so as to enable the user to obtain a desired image.

According to various embodiments of the disclosure, when a user deletes an object image region (e.g., a specific object) in an image, a mask region related to the deleted object image region may be transformed so as to prevent a generative artificial intelligence from estimating or predicting a shape of the deleted object image region.

In addition, various effects identifiable directly or indirectly through the disclosure may be provided.

### [Brief Description of Drawings]

With regard to the description of the drawings, the same or like reference signs may be used to designate the same or like elements.
FIG. 1A is a block diagram of an electronic device in a network environment according to various embodiments of the disclosure.
FIG. 1B is a block diagram of a display module according to various embodiments of the disclosure.
FIG. 2 is a block diagram schematically illustrating a configuration of an electronic device according to an embodiment of the disclosure.
FIG. 3A is a diagram schematically illustrating a first image displayed through a display of an electronic device according to an embodiment of the disclosure.
FIG. 3B is a diagram schematically illustrating a mask region generated in relation to an object image region in a first image of an electronic device according to an embodiment of the disclosure.
FIG. 3C is a diagram schematically illustrating a second image, in which an object image region is deleted from a first image of an electronic device and a background image region is filled in, according to an embodiment of the disclosure.
FIG. 4 is a diagram schematically illustrating an embodiment in which an electronic device generates a mask region with regard to an object image region according to an embodiment of the disclosure.
FIGS. 5A to 5C are diagrams schematically illustrating embodiments in which an electronic device transforms an object image region to a polygonal shape according to an embodiment of the disclosure.
FIG. 6 is a diagram schematically illustrating an embodiment in which an electronic device generates an irregular-sized hole around a mask region according to an embodiment of the disclosure.
FIG. 7A is a diagram schematically illustrating a first image including an object image region and a shadow image region displayed through a display of an electronic device according to an embodiment of the disclosure.
FIG. 7B is a diagram schematically illustrating a mask region generated by including an object image region and a shadow image region in a first image of an electronic device according to an embodiment of the disclosure.
FIG. 7C is a diagram schematically illustrating a second image, in which an object image region and a shadow image region are deleted from a first image of an electronic device and a background image region is filled in, according to an embodiment of the disclosure.
FIG. 8A is a diagram schematically illustrating a first image including an object image region and a background image region displayed through a display of an electronic device according to an embodiment of the disclosure.
FIG. 8B is a diagram schematically illustrating a mask region and an anchor point generated with regard to an object image region in a first image of an electronic device according to an embodiment of the disclosure.
FIG. 8C is a diagram schematically illustrating a second image, in which an object image region is deleted from a first image of an electronic device and a background image region is filled in, according to an embodiment of the disclosure.
FIG. 9A is a diagram schematically illustrating a first image displayed through a display of an electronic device according to an embodiment of the disclosure.
FIG. 9B is a diagram schematically illustrating an embodiment in which an object image region is moved in a first image of an electronic device according to an embodiment of the disclosure.
FIG. 9C is a diagram schematically illustrating a mask region generated with respect to an object image region in a first image of an electronic device according to an embodiment of the disclosure.
FIG. 9D is a diagram schematically illustrating an embodiment in which a mask region generated in relation to an object image region in a first image of an electronic device is transformed to a polygonal shape according to an embodiment of the disclosure.
FIG. 9E is a diagram schematically illustrating an embodiment in which an object image region is deleted in a first image of an electronic device and the object image region is moved, according to an embodiment of the disclosure.
FIG. 10 is a flowchart schematically illustrating a method of processing an image using an electronic device according to an embodiment of the disclosure.

### [Mode for the Invention]

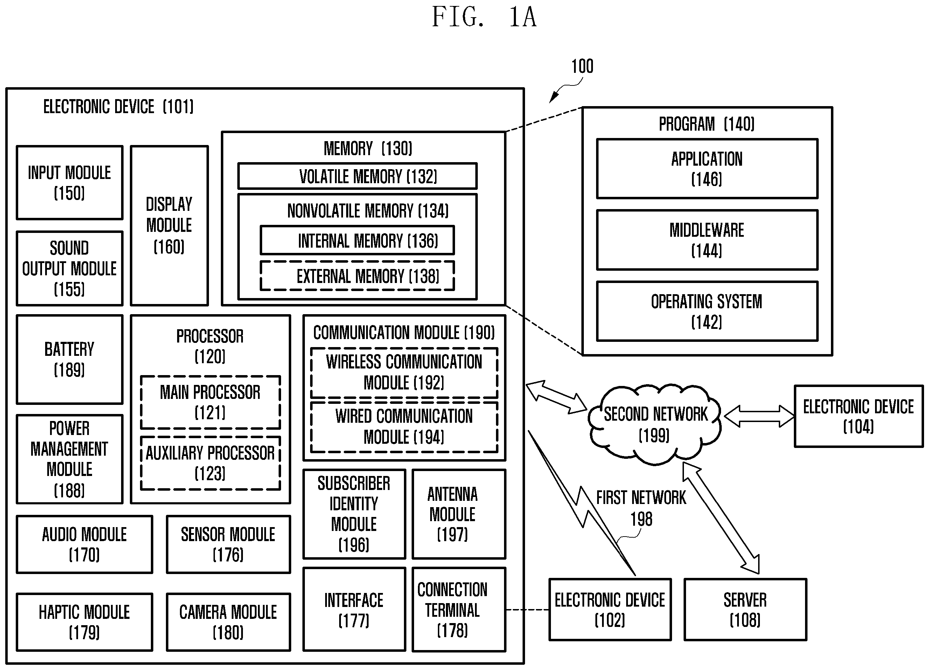

FIG. 1A is a block diagram illustrating an electronic device 101 in a network environment 100 according to various embodiments.

Referring to FIG. 1A, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semisupervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

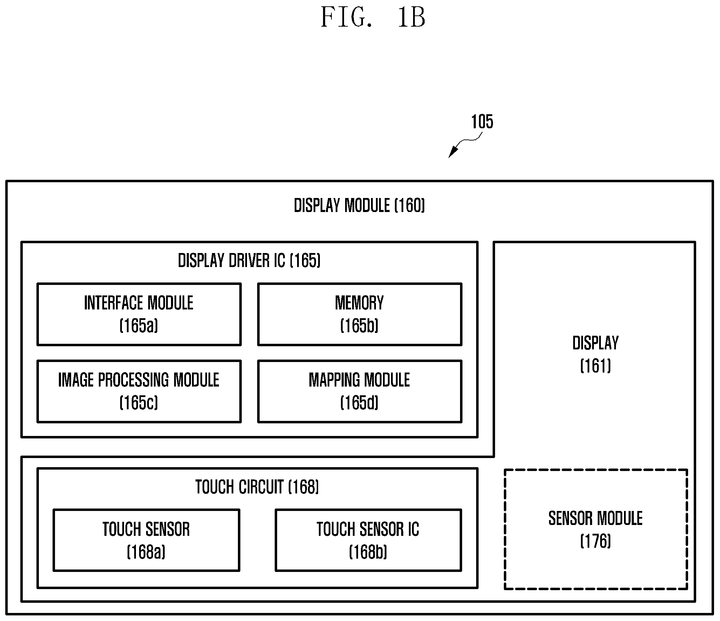

Fig. 1B is a block diagram 105 illustrating the display module 160 according to various embodiments.

Referring to Fig. 1B, the display module 160 may include a display 161 and a display driver integrated circuit (DDI) 165 to control the display 161. The DDI 165 may include an interface module 165a, memory 165b (e.g., buffer memory), an image processing module 165c, or a mapping module 165d. The DDI 165 may receive image information that contains image data or an image control signal corresponding to a command to control the image data from another component of the electronic device 101 via the interface module 165a. For example, according to an embodiment, the image information may be received from the processor 120 (e.g., the main processor 121 (e.g., an application processor)) or the auxiliary processor 123 (e.g., a graphics processing unit) operated independently from the function of the main processor 121. The DDI 165 may communicate, for example, with touch circuitry 168 or the sensor module 176 via the interface module 165a. The DDI 165 may also store at least part of the received image information in the memory 165b, for example, on a frame by frame basis. The image processing module 165c may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 161. The mapping module 165d may generate a voltage value or a current value corresponding to the image data pre-processed or post-processed by the image processing module 165c. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 161 may be driven, for example, based at least in part on the voltage value or the current value such that visual information (e.g., a text, an image, or an icon) corresponding to the image data may be displayed via the display 161.

According to an embodiment, the display module 160 may further include the touch circuitry 168. The touch circuitry 168 may include a touch sensor 168a and a touch sensor IC 168b to control the touch sensor 168a. The touch sensor IC 168b may control the touch sensor 168a to sense a touch input or a hovering input with respect to a certain position on the display 161. To achieve this, for example, the touch sensor 168a may detect (e.g., measure) a change in a signal (e.g., a voltage, a quantity of light, a resistance, or a quantity of one or more electric charges) corresponding to the certain position on the display 161. The touch circuitry 168 may provide input information (e.g., a position, an area, a pressure, or a time) indicative of the touch input or the hovering input detected via the touch sensor 168a to the processor 120. According to an embodiment, at least part (e.g., the touch sensor IC 168b) of the touch circuitry 168 may be formed as part of the display 161 or the DDI 165, or as part of another component (e.g., the auxiliary processor 123) disposed outside the display module 160.

According to an embodiment, the display module 160 may further include at least one sensor (e.g., a fingerprint sensor, an iris sensor, a pressure sensor, or an illuminance sensor) of the sensor module 176 or a control circuit for the at least one sensor. In such a case, the at least one sensor or the control circuit for the at least one sensor may be embedded in one portion of a component (e.g., the display 161, the DDI 165, or the touch circuitry 168)) of the display module 160. For example, when the sensor module 176 embedded in the display module 160 includes a biometric sensor (e.g., a fingerprint sensor), the biometric sensor may obtain biometric information (e.g., a fingerprint image) corresponding to a touch input received via a portion of the display 161. As another example, when the sensor module 176 embedded in the display module 160 includes a pressure sensor, the pressure sensor may obtain pressure information corresponding to a touch input received via a partial or whole area of the display 161. According to an embodiment, the touch sensor 168a or the sensor module 176 may be disposed between pixels in a pixel layer of the display 161, or over or under the pixel layer.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, and/or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

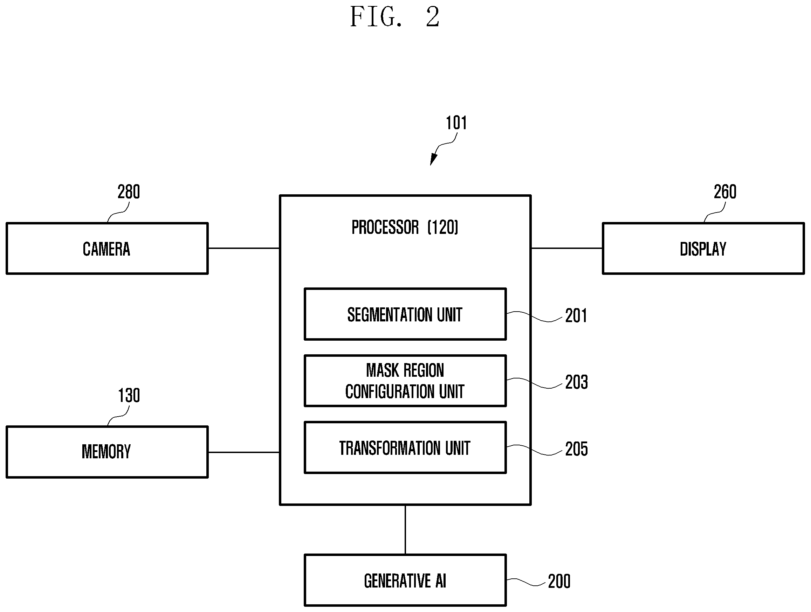

FIG. 2 is a block diagram schematically illustrating a configuration of an electronic device according to an embodiment of the disclosure.

According to various embodiments, the electronic device 101 described below may include at least some embodiments described with reference to FIGS. 1A and 1B. In describing the electronic device 101 according to embodiments of the disclosure below, the same reference numerals are given to components that are substantially the same as the embodiments described with reference to FIGS. 1A and 1B, and a description of the functions thereof will be omitted to avoid redundancy.

Referring to FIG. 2, the electronic device 101 according to an embodiment of the disclosure may include a camera 280, a display 260, a memory 130, and/or a processor 120.

According to an embodiment, the electronic device 101 may include a generative artificial intelligence (AI) 200. According to various embodiments, the generative artificial intelligence (AI) 200 may be included in the server 108 illustrated in FIG. 1A. According to various embodiments, the generative AI 200 may be included in the electronic device 101 and/or the server 108 illustrated in FIG. 1A.

According to various embodiments, the camera 280 may include the camera module 180 illustrated in FIG. 1A. For example, the camera 280 may be at least one camera used in the electronic device 101. The display 260 may include the display module 160 illustrated in FIGS. 1A and 1B.

According to various embodiments, the memory 130 may include one or more storage media for storing instructions. For example, the instructions may be configured to perform or control at least some functions of the electronic device when executed individually or collectively by the at least one processor 120.

According to various embodiments, at least one processor 120 may be included in the electronic device 101. For example, the processor 120 may include an application processor, a micro-processor unit (MPU), and/or a data processing unit (DPU).

According to an embodiment, the camera 280 (e.g., the camera module 180 in FIG. 1A) may capture at least one of a still image and a video. The image and/or video captured through the camera 280 may be stored in the memory 130. For example, the camera 280 may include one or more image sensors (e.g., a front sensor or a rear sensor), at least one lens, an image signal processor (ISP), or a flash (e.g., an LED or a xenon lamp).

According to an embodiment, the display 260 (e.g., the display module 160 in FIG. 1A and FIG. 1B) may display an image and/or video stored in the memory 130. The display 260 may display an execution screen of a specific application. For example, the specific application may include an application such as a gallery or photo editor capable of editing an image. The specific application is not limited to the above-described examples, and may include other various applications capable of editing an image.

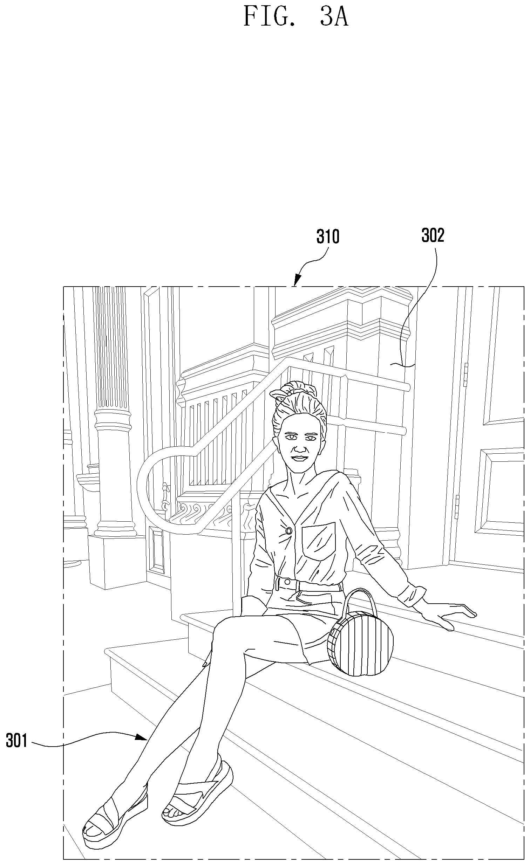

According to various embodiments, the display 260 may include a touch circuit (e.g., the touch circuit 168 in FIG. 1B). The touch circuit 168 may include the touch sensor 168a and the touch sensor IC 168b illustrated in FIG. 1B. The touch circuit 168 may detect or receive a user's touch, press (e.g., long press), drag, and/or input using a stylus pen with respect to a designated location of the display 260. For example, the display 260 may receive a user input (e.g., a touch, a press, or a drag) with respect to an object image region (e.g., a specific object) in an image. For example, the display 260 may receive a user input for selecting the object image region in an image (e.g., a first image 310 in FIG. 3A) including the object image region (e.g., an object image region 301 in FIG. 3A) and/or a background image region (e.g., a background image region 302 in FIG. 3A). For example, the display 260 may provide an image or a screen for configuring a function and an operation of a specific application (e.g., gallery or a photo editor) capable of editing the image, based on an input signal from a user of the electronic device 101. For example, the display 260 may provide an operation or performance based on a user interface (UI) capable of providing various services to a user.

According to various embodiments, the display 260 may display an initial screen, a configuration screen, and/or execution screens of various applications of the electronic device 101. The display 260 may display a user interface (UI) capable of providing various services to a user of the electronic device 101. The display 260 may perform a display function and an input function. The display 260 may include a display (e.g., the display 161 in FIG. 1B) and a touch circuit (e.g., the touch circuit 168 in FIG. 1B) to perform display and input functions. The display 161 may visually provide a menu of the electronic device 101, input data, function configuration information, and various information to a user. The display 161 may include at least one of a liquid crystal display (LCD), an organic light emitting diode (OLED), and an active matrix organic light emitting diode (AMOLED). The touch circuit 168 may include a touch sensor (e.g., the touch sensor 168a in FIG. 1B) such as a capacitive overlay, a resistive overlay, or an infrared beam, or a pressure sensor.

According to an embodiment, the memory 130 may store an image captured through the camera 280. The memory 130 may store an image provided through an external electronic device (e.g., the external electronic devices 102 and 104 in FIG. 1A) and/or a server (e.g., the server 108 in FIG. 1A). The memory 130 may store at least one application (e.g., gallery or photo editor) capable of editing an image. The memory 130 may store executable instructions. For example, the memory 130 may include one or more storage media for storing instructions. For example, the memory 130 may store at least one instruction which, when executed individually or collectively by the at least one processor 120, causes the electronic device 101 to perform at least one operation. For example, at least one the instruction may be stored in a computer-readable recording medium. The recording medium may be tangible and non-transitory. The memory 130 and/or the recording medium may store one or more programs including at least one instruction.

According to various embodiments, the memory 130 may store an initial screen, a configuration screen, and/or various applications of the electronic device 101 provided through the display 260. The memory 130 may store a user interface (UI) capable of providing various services to a user of the electronic device 101. The memory 130 may perform a function of storing a program (e.g., the program 140 in FIG. 1A) for processing and controlling the processor 120, an operating system (e.g., the operating system 142 in FIG. 1A), various applications, and input/output data. The memory 130 may store a program for controlling overall operation of the electronic device 101. The memory 130 may store various configuration information necessary for processing a function in the electronic device 101.

According to an embodiment, the processor 120 may be operatively connected to the camera 280, the display 260, the memory 130, and/or the generative AI 200. The processor 120 may control functions and operations of the camera 280, the display 260, the memory 130, and/or the generative AI 200. The processor 120 may be configured to access the memory 130 and execute at least one instruction. The electronic device 101 may include at least one processor 120. For example, the processor 120 may include an application processor, a microprocessor unit (MPU), and/or a data processing unit (DPU).

According to an embodiment, the processor 120 may display, on the display 260, a first image (e.g., the first image 310 in FIG. 3A) stored in the memory 130, based on an input signal from a user of the electronic device 101. The first image (e.g., the first image 310 in FIG. 3A) may include an object image region (e.g., the object image region 301 disclosed in FIG. 3A) and/or a background image region (e.g., the background image region 302 in FIG. 3A). The processor 120 may display, through the display 260, an execution screen of a specific application (e.g., gallery or photo editor) capable of editing the first image (e.g., the first image 310 in FIG. 3A) based on an input signal from the user of the electronic device 101. The processor 120 may receive (e.g., detect) a user input (e.g., touch or press) related to selection of an object image region (e.g., the specific object 301 in FIG. 3A) included in the first image (e.g., the first image 310 in FIG. 3A).

According to an embodiment, the processor 120 may include a segmentation unit 201, a mask region configuration unit 203, and/or a transformation unit 205.

According to an embodiment, the processor 120 may identify an outline (e.g., shape) of the object image region (e.g., the object image region 301 in FIG. 3A) selected by the user of the electronic device 101 by using the segmentation unit 201. For example, the segmentation unit 201 may identify an external shape (e.g., outline or boundary) of the object image region (e.g., a specific object such as a person) selected by the user of the electronic device 101.

According to various embodiments, the segmentation unit 201 may perform segmentation with respect to the object image region (e.g., the object image region 301 in FIG. 3A) selected by the user in the first image (e.g., the first image 310 in FIG. 3A). For example, the information segmented through the segmentation unit 201 may be displayed after being processed in terms of, for example, resolution, brightness, shape, or size through the image processing module 165c of the display 260. The segmentation unit 201 may perform image segmentation (e.g., object segmentation, skin segmentation, body segmentation, or background segmentation). For example, the image segmentation may include an operation of dividing or subdividing a region corresponding to an object image region (e.g., the object image region 301 in FIG. 3A) selected by the user so that the user is capable of recognizing the same. For example, image segmentation may include an operation of dividing an object image region (e.g., the object image region 301 in FIG. 3A) in the first image (e.g., the first image 310 in FIG. 3A) in units of pixels or regions, and classifying or identifying the same.

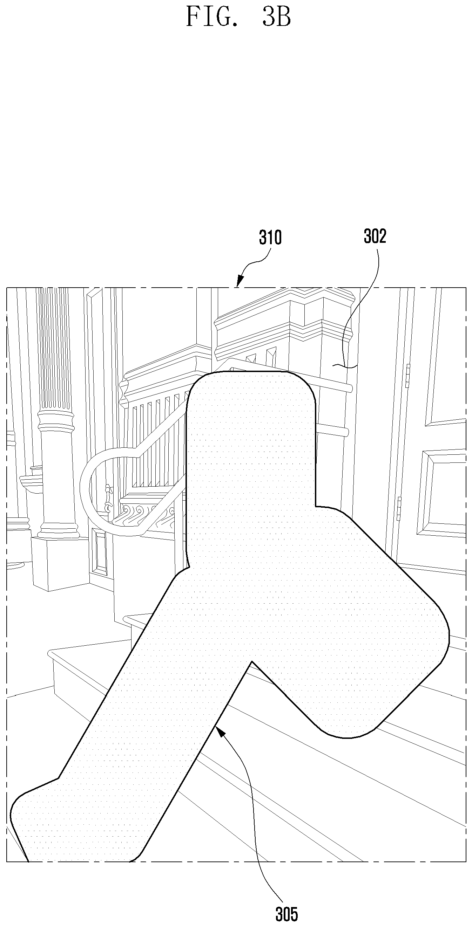

According to an embodiment, the processor 120 may generate a mask region (e.g., a mask region 305 in FIG. 3B) related to the object image region (e.g., the object image region 301 in FIG. 3A) identified through the segmentation unit 201, by using the mask region configuration unit 203. For example, the mask region (e.g., the mask region 305 in FIG. 3B) may include a mask map. For example, the processor 120 may configure the mask region (e.g., the mask region 305 in FIG. 3B) related to the object image region (e.g., the object image region 301 in FIG. 3A) identified through the segmentation unit 201 by using the mask region configuration unit 203.

According to various embodiments, the mask region configuration unit 203 may recognize or identify the identified object image region and generate a mask map. For example, the mask region configuration unit 203 may classify the object image region (e.g., the object image region 301 in FIG. 3A) identified through the segmentation unit 201 and the background image region (e.g., the background image region 302 in FIG. 3B) based on features (e.g., attributes) such as an edge or blob of the object image region (e.g., the object image region 301 in FIG. 3A) identified through the segmentation unit 201.

According to an embodiment, the processor 120 may transform the mask region (e.g., the mask region 305 in FIG. 3B) generated through the mask region configuration unit 203 to have a different shape by using the transformation unit 205. According to various embodiments, the processor 120 may transform the mask region (e.g., the mask region 305 in FIG. 3B) generated through the mask region configuration unit 203 to have a different outline (e.g., shape) or boundary, by using the transformation unit 205.

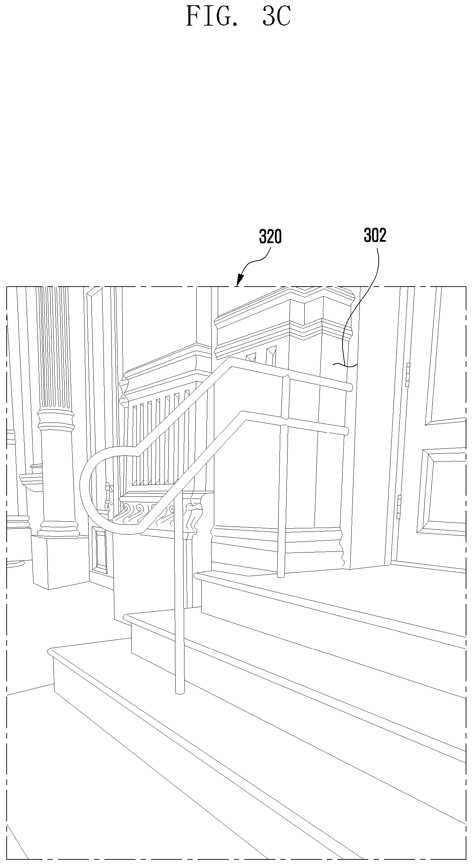

According to an embodiment, the processor 120 may generate a second image (e.g., a second image 320 in FIG. 3C) in which the selected object image region (e.g., the specific object 301 in FIG. 3A) is changed to the background image region (e.g., the background image region 302 in FIG. 3A) through the generative artificial intelligence (AI) 200, based on information related to the first image (e.g., the first image 310 in FIG. 3A) including the transformed mask region.

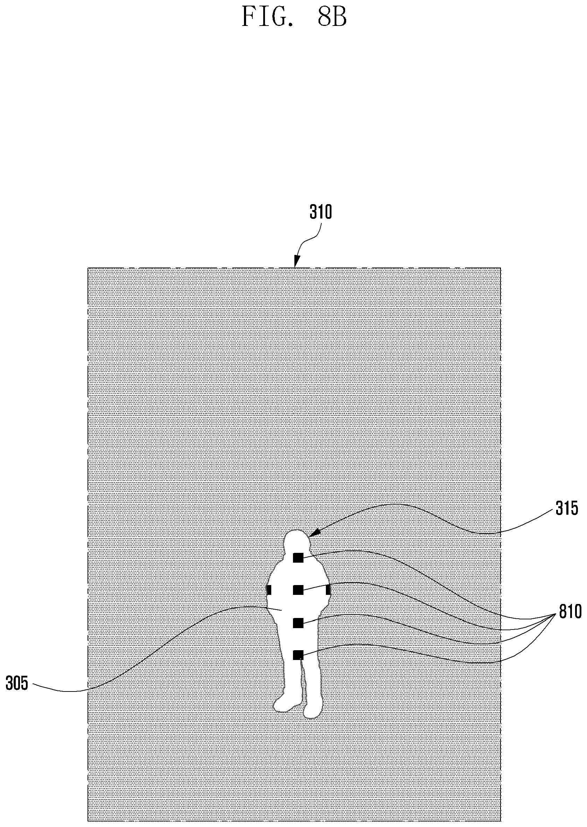

According to an embodiment, the processor 120 may transfer information related to the first image (e.g., the first image 310 in FIG. 3B and/or the first image 310 in FIG. 8B) including the mask region transformed through the transformation unit 205 to the generative AI 200.

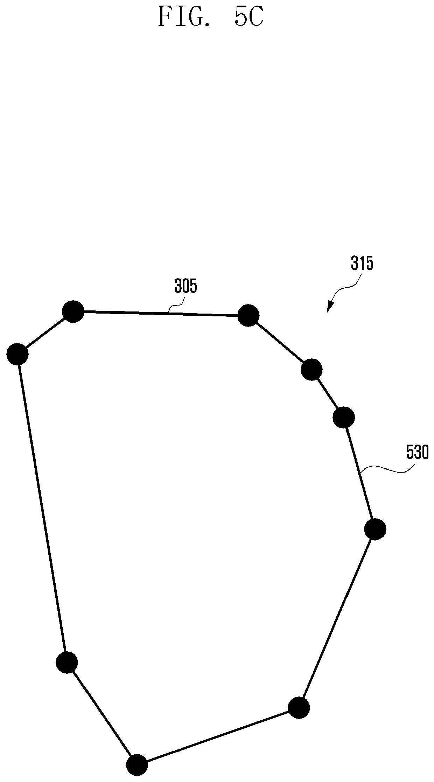

For example, the transformed mask region may include a transformed mask region 315 illustrated in FIGS. 5C, 6, 7B, 8B, and/or 9D.

According to various embodiments, the processor 120 may match the mask region transformed through the transformation unit 205 to the first image (e.g., the first image 310 in FIG. 3B and/or the first image 310 in FIG. 8B), and may transfer the matched first image 310 and information related to the transformed mask region to the generative AI 200.

According to various embodiments, the information related to the mask region (e.g., the transformed mask region 315 illustrated in FIG. 5C, FIG. 6, FIG. 7B, FIG. 8B, and/or FIG. 9D) transformed through the transformation unit 205 may include information associated with transformation performed such that the generative AI 200 is incapable of estimating or predicting the mask region generated by the mask region configuration unit 203.

According to an embodiment, the mask region (e.g., the transformed mask region 315 illustrated in FIG. 5C, FIG. 6, FIG. 7B, FIG. 8B, and/or FIG. 9D) transformed through the transformation unit 205 may include a region that is expanded or transformed to be larger or wider than the object image region (e.g., the object image region 301 in FIG. 3A) selected from the first image (e.g., the first image 310 in FIG. 3A). For example, the mask region (e.g., the transformed mask region 315 in FIG. 5C, FIG. 6, FIG. 7B, FIG. 8B, and/or FIG. 9D) transformed through the transformation unit 205 may include a region in which the mask region generated by the mask region configuration unit 203 is expanded to be larger or wider than the object image region (e.g., the object image region 301 in FIG. 3A) selected from the first image (e.g., the first image 310 in FIG. 3A). For example, the generated mask region (e.g., the mask region 305 in FIG. 3B) and/or the transformed mask region (e.g., the transformed mask region 315 in FIG. 5C, FIG. 6, FIG. 7B, FIG. 8B, and/or FIG. 9D) may include a transformed region or a region expanded by approximately 5 to 10% compared to a size and/or area of the object image region (e.g., the object image region 301 in FIG. 3A) selected from the first image (e.g., the first image 310 in FIG. 3A).

According to an embodiment, the mask region (e.g., the transformed mask region 315 illustrated in FIG. 5C, FIG. 6, FIG. 7B, FIG. 8B, and/or FIG. 9D) transformed through the transformation unit 205 may include a region in which mask region generated through the mask region configuration unit 203 is transformed to a polygonal shape (e.g., a polygonal shape 530 in FIG. 5C). For example, the region transformed to a polygonal shape (e.g., the polygonal shape 530 in FIG. 5C) may include a shape having no interior angle of approximately 180° or more. For example, the polygon may include multiple vertices. For example, the region transformed to a polygonal shape (e.g., the polygonal shape 530 in FIG. 5C) may include an outline or a boundary of the polygon.

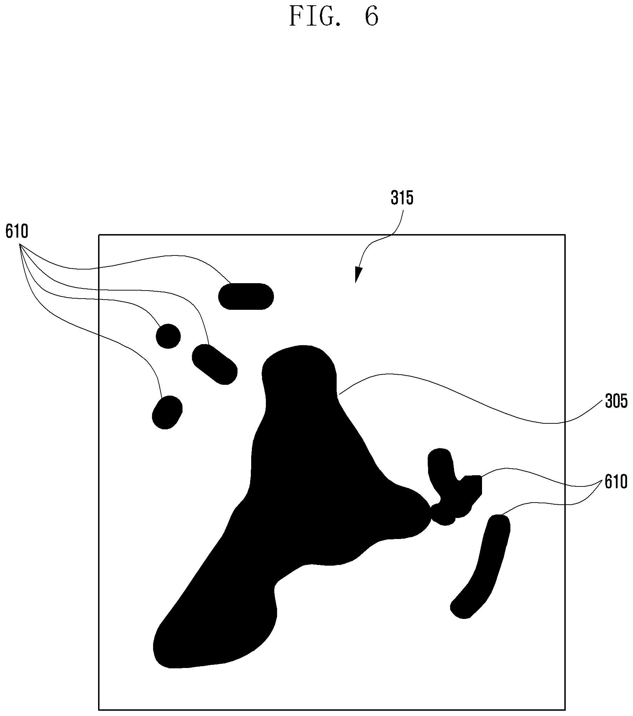

According to an embodiment, the mask region (e.g., the transformed mask region 315 illustrated in FIGS. 5C, 6, 7B, 8B, and/or 9D) transformed through the transformation unit 205 may include an irregular-sized hole (e.g., a hole 610 in FIG. 6) generated around the mask region generated through the mask region configuration unit 203. For example, the mask region (e.g., the transformed mask region 315 illustrated in FIG. 5C, FIG. 6, FIG. 7B, FIG. 8B, and/or FIG. 9D) transformed through the transformation unit 205 may include at least one randomly formed hole around the mask region generated through the mask region configuration unit 203. For example, the at least one hole (e.g., the hole 610 in FIG. 6) may be formed at a position that prevents the generative AI 200 from estimating or predicting the mask region (e.g., the mask region 305 in FIG. 6) generated through the mask region configuration unit 203.

According to an embodiment, the mask region (e.g., the transformed mask region 315 illustrated in FIG. 5C, FIG. 6, FIG. 7B, FIG. 8B, and/or FIG. 9D) transformed through the transformation unit 205 may include an anchor point (e.g., an anchor point 810 in FIG. 8B) generated in the mask region generated through the mask region configuration unit 203.

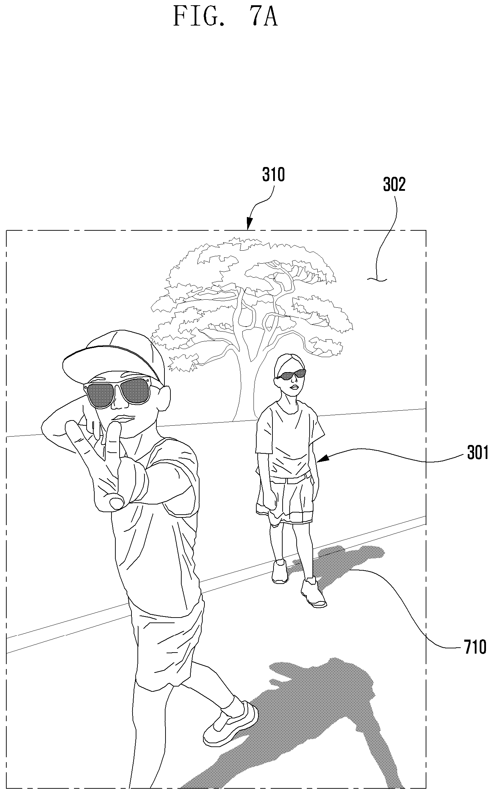

According to an embodiment, the processor 120 may identify whether the mask region generated through the mask region configuration unit 203 includes a shadow image region (e.g., a shadow image region 710 in FIG. 7A). For example, in a case in which the mask region generated through the mask region configuration unit 203 includes a shadow image region (e.g., the shadow image region 710 in FIG. 7A), the processor 120 may transform the mask region generated through the mask region configuration unit 203 and the shadow image region to have different outlines (e.g., shapes) or boundaries by using the transformation unit 205.

According to various embodiments, the processor 120 may perform a function of controlling the overall operation of the electronic device 101 and a signal flow between internal components, and processing data. The processor 120 may include, for example, a central processing unit (CPU), an application processor, and/or a communication processor. The processor 120 may include a single core processor or a multi-core processor. The processor 120 may include at least one processor. For example, the processor 120 may include an application processor (e.g., the main processor 121 in FIG. 1A) and a sensor hub processor (e.g., the sub-processor 123 in FIG. 1A). According to various embodiments, the processor 120 may include at least one of an application processor, a micro-processor unit (MPU), and a data processing unit (DPU).

According to various embodiments, operations executed in the electronic device 101 may be performed and/or executed by at least one instruction stored in the processor 120 and/or the memory 130. For example, in the document, an embodiment in which the electronic device 101 may perform an operation may be interpreted as meaning that the operation is performed by at least one instruction stored in the processor 120 and/or the memory 130.

According to an embodiment, the generative AI 200 may be included in the electronic device 101. According to various embodiments, the generative AI 200 may be included in the server 108 illustrated in FIG. 1A. According to various embodiments, the generative AI 200 may be included in at least one of the electronic device 101 and the server 108 illustrated in FIG. 1A.

According to an embodiment, the generative AI 200 may generate the second image (e.g., the second image 320 in FIG. 3C) in which the selected object image region (e.g., the object image region 301 in FIG. 3A) is changed to the background image region (e.g., the background image region 302 in FIG. 3C), based on information that is related to the first image (e.g., the first image 310 in FIG. 3B) including the mask region (e.g., the transformed mask region 315 in FIG. 5C, FIG. 6, FIG. 7B, FIG. 8B, and/or FIG. 9D) transformed through the transformation unit 205 and is transferred through the processor 120.

According to an embodiment, the generative AI 200 may generate the second image (e.g., the second image 320 in FIG. 3C) in which the object image region (e.g., the object image region 301 in FIG. 3A) is deleted from the first image (e.g., the first image 310 in FIG. 3A), based on information that is related to the first image (e.g., the first image 310 in FIG. 3A) including the mask region (e.g., the transformed mask region 315 in FIG. 5C, FIG. 6, FIG. 7B,

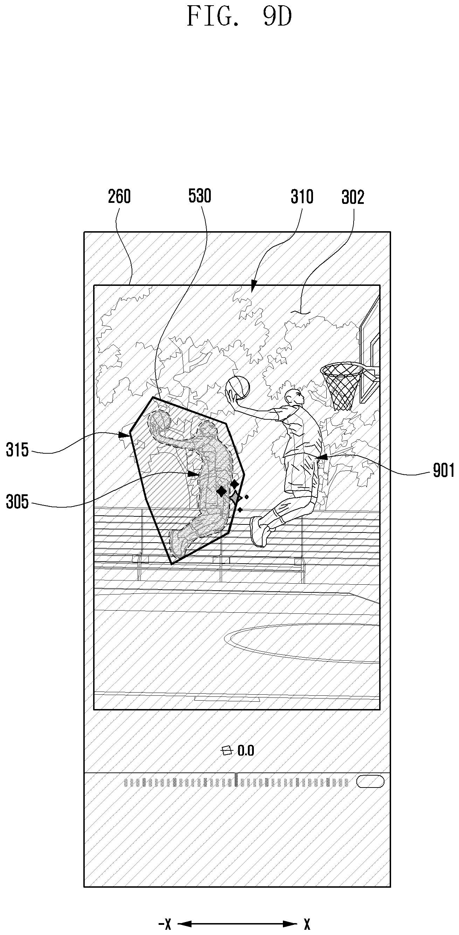

FIG. 8B, and/or FIG. 9D) transformed through the transformation unit 205 and is transferred through the processor 120. The second image (e.g., the second image 320 in FIG. 3C) in which the object image region (e.g., the object image region 301 in FIG. 3A) is deleted through the generative AI 200 may be displayed through the display device 260. For example, the second image (e.g., the second image 320 in FIG. 3C) in which the object image region (e.g., the object image region 301 in FIG. 3A) is deleted through the generative artificial intelligence 200 may include the background image region (e.g., the background image region 302 in FIG. 3C) generated in the region in which the object image region (e.g., the object image region 301 in FIG. 3A) is deleted.

According to various embodiments, the generative AI 200 may receive information (e.g., the second image 320 in FIG. 3C) transferred through the processor 120. For example, the generative artificial intelligence 200 may receive information related to the first image (e.g., the first image 310 in FIG. 3A) and the mask region transformed through the transformation unit 205 (e.g., the transformed mask region 315 illustrated in FIG. 5C, FIG. 6, FIG. 7B, FIG. 8B, and/or FIG. 9D) through the processor 120. For example, the generative AI 200 may receive, through the processor 120, information related to the first image (e.g., the first image 310 in FIG. 3B) including the mask region (e.g., the transformed mask region 315 in FIG. 5C, FIG. 6, FIG. 7B, FIG. 8B, and/or FIG. 9D) transformed through the transformation unit 205. For example, the generative AI 200 may process the information transferred through the processor 120, and then transfer the processed information to the processor 120.

According to an embodiment, the generative AI 200 may generate a plan for performing a task, based on the information received from the processor 120. For example, the plan may be generated by a system based on the generative AI 200. For example, the system based on the generative AI 200 may include a rule-based system, a neural networkbased system (e.g., a feedforward neural network (FNN)) and/or a recurrent neural network (RNN) system. For example, the plan may be selected from a pre-defined data set, or may be generated in real time in response to a user request (e.g., input). For example, the generative AI 200 may select at least one plan from a plurality of predefined plans.

According to various embodiments, the generative AI 200 may transfer a result obtained according to the generated plan to the processor 120. The processor 120 may display the result obtained according to the plan on the display 260. For example, the generative AI 200 may include a learning model trained using an artificial intelligence algorithm. The generative AI 200 may include a learning model trained using at least one of machine learning, neural network, genetic, deep learning, and classification algorithms, as an artificial intelligence algorithm. For example, the generative AI 200 may be implemented based on machine learning, a neural network (NN), or an artificial neural network (ANN). For example, the artificial neural network may include a computational model implemented as software or hardware that uses multiple artificial neurons connected through connection lines to mimic the computing capability of a biological system.

FIG. 3A is a diagram schematically illustrating a first image displayed through a display of an electronic device according to an embodiment of the disclosure. FIG. 3B is a diagram schematically illustrating a mask region generated in relation to an object image region in a first image of an electronic device according to an embodiment of the disclosure. FIG. 3C is a diagram schematically illustrating a second image, in which an object image region is deleted from a first image of an electronic device and a background image region is filled in, according to an embodiment of the disclosure.

According to various embodiments, operations corresponding to embodiments related to the first image 310 and the second image 320 described below may be performed using the components described in FIG. 2.

Referring to FIG. 3A, the electronic device 101 may display the first image 310 stored in the memory 130 through the display 260, based on an input signal from a user. For example, the electronic device 101 may display the first image 310 stored in the memory 130 through a user interface, based on the input signal from the user. For example, the first image 310 may include the object image region 301 and/or the background image region 302. For example, the object image region 301 may include a specific object such as a human shape. For example, the background image region 302 may include a specific image such as a building shape. According to various embodiments, the object image region 301 and the background image region 302 may not be limited to the above-described examples, and may include images of various other shapes.

According to an embodiment, FIG. 3A may be a screen in which an execution screen of a specific application (e.g., gallery or photo editor) selected by the user to edit the first image 310 is displayed through the display 260.

According to an embodiment, while the first image 310 is displayed through the display 260 or the user interface, the processor 120 may receive an input (e.g., an input signal) for selecting the object image region 301 (e.g., a specific object such as a human shape) included in the first image 310. For example, the processor 120 may receive a user input related to a signal for selecting the object image region 301 included in the first image 310. For example, the user of the electronic device 101 may select the object image region 301 in the first image 310 by using a finger or a stylus pen, in order to delete the object image region 301. For example, the user input may include a touch or press (e.g., a long press) with regard to the object image region 301 in the first image 310. For example, the user input may include an input by a stylus pen with regard to the object image region 301 in the first image 310. For example, the processor 120 may identify an outline (e.g., shape) or a boundary of the object image region 301 (e.g., a specific object such as a human shape) selected by the user of the electronic device 101 by using the segmentation unit 201.

Referring to FIG. 3B, the processor 120 may generate the mask region 305 (e.g., mask map) related to the object image region 301 identified through the segmentation unit 201, by using the mask region configuration unit 203. For example, the processor 120 may use the transformation unit 205 to transform the mask region 305, which is generated through the mask region configuration unit 203, such that the mask region 305 has a different outline (e.g., shape) or boundary. For example, the processor 120 may transform the mask region 305, which is generated through the mask region configuration unit 203, such that a size of the mask region 305 is expanded beyond the object image region 301 by using the transformation unit 205. For example, the generated mask region 305 may include a region expanded by approximately 5 to 10% in size and/or area, compared to the object image region 301 selected in the first image 310. For example, when the generated mask region 305 is transformed, the transformed mask region may include the transformed mask region 315 disclosed in FIG. 5C, FIG. 6, FIG. 7B, FIG. 8B, and/or FIG. 9D. For example, the processor 120 may use the transformation unit 205 to expand the size of the mask region 305, which is generated through the mask region configuration unit 203, to be larger than the object image region 301, or to transform the mask regions 305 in various shapes (e.g., outlines or boundaries), and thus the generative artificial intelligence (AI) 200 may have difficulty in estimating or predicting the object image region 301.

According to an embodiment, the processor 120 may transfer information related to the first image 310 including the transformed mask region (e.g., the mask region 315 illustrated in FIG. 5C, FIG. 6, FIG. 7B, FIG. 8B, and/or FIG. 9D) transformed through the transformation unit 205 and/or the generated mask region 305 to the generative AI 200.

Referring to FIG. 3C, the generative AI 200 may generate the second image 320 in which the object image region 301 is deleted from the first image 310, based on the information that is related to the first image 310 including the mask region (e.g., the transformed mask region 315 illustrated in FIG. 5C, FIG. 6, FIG. 7B, FIG. 8B, and/or FIG. 9D) transformed through the transformation unit 205 and/or the generated mask region 305, and is transferred through the processor 120. For example, the generative AI 200 may generate the second image 320 in which the object image region 301 selected by the user is changed to the background image region 302, based on the information that is related to the first image 310 including the transformed mask region (e.g., the transformed mask region 315 illustrated in FIG. 5C, FIG. 6, FIG. 7B, FIG. 8B, and/or FIG. 9D) and/or the generated mask region 305, and is transferred through the processor 120.

According to an embodiment, the generative AI 200 may fill the region in which the object image region 301 (e.g., a specific object) is deleted, with at least a portion of the background image region 302. For example, the generative AI 200 may fill the mask region transformed by the transformation unit 205, with at least a portion of the background image region 302. For example, the generative AI 200 may overlap the mask region transformed by the transformation unit with at least a portion of the background image region 302. For example, the generative AI 200 may replace and/or change the region in which the object image region 301 is deleted or the mask region 305 with at least a portion of the background image region 302. For example, the second image 320 may include the background image region 302 in which the object image region 301 is deleted. The second image 320 generated through the generative AI 200 may be transferred to the processor 120. The processor 120 may display the second image 320 on the display 260. For example, the processor 120 may delete the object image region 301 (e.g., a specific object such as a human shape) in the first image 310 and obtain the second image 320 in which only the background image region 302 desired by the user of the electronic device 101 is displayed. For example, the second image 320 may include an image in which the object image region 301 selected by the user is deleted and the background image region 302 is filled in or overlapped.

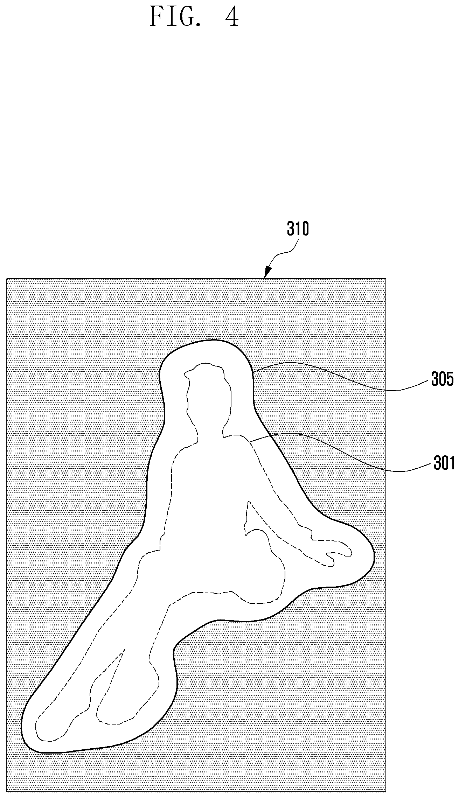

FIG. 4 is a diagram schematically illustrating an embodiment in which an electronic device generates a mask region with regard to an object image region according to an embodiment of the disclosure.

According to an embodiment, when a user of the electronic device 101 selects the object image region 301 (e.g., a specific object such as a human shape) included in the first image 310 in order to delete the object image region 301, the processor 120 may identify an outline (e.g., shape) or boundary of the object image region 301 selected by the user of the electronic device 101 by using the segmentation unit 201.

According to an embodiment, the processor 120 may generate the mask region 305 related to the identified outline (e.g., shape) of the object image region 301 by using the mask region configuration unit 203. For example, the processor 120 may transform the mask region 305, generated through the mask region configuration unit 203, to have a different outline (e.g., shape) or boundary by using the transformation unit 205. For example, the processor 120 may transform the mask region 305, generated through the mask region configuration unit 203, such that the mask region 305 is expanded beyond the object image region 301 by using the transformation unit 205.

According to an embodiment, the processor 120 may generate the mask region 305 by expanding a boundary region (or an outline region) of the object image region 301 by using the transformation unit 205. For example, the mask region 305 may include a region expanded by approximately 5 to 10% in size and/or area as compared to the object image region 301. For example, when the mask region 305 is expanded to be larger than the object image region 301, the generative AI 200 may be incapable of estimating or predicting the shape of the object image region 301. For example, when the generative AI 200 is incapable of estimating or predicting the shape of the object image region 301, the generative AI 200 may not generate an unnecessary image that the user does not want in the region in which the object image region 301 is deleted.

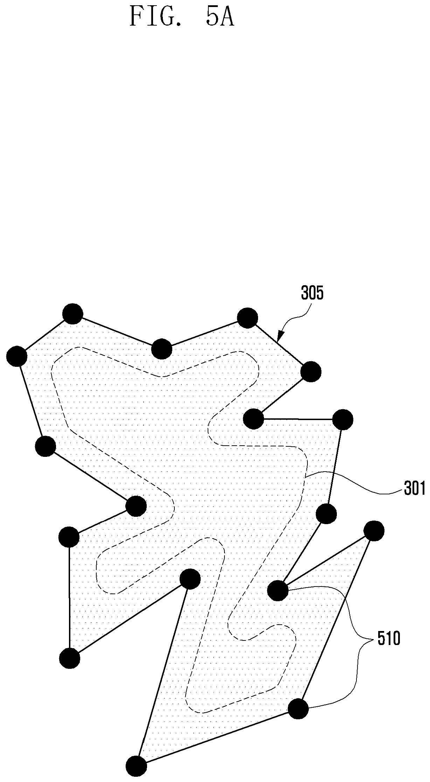

FIGS. 5A to 5C are diagrams schematically illustrating embodiments in which an electronic device transforms an object image region to a polygonal shape according to an embodiment of the disclosure.

According to an embodiment, when a user of the electronic device 101 selects the object image region 301 (e.g., a specific object) included in the first image 310 in order to delete the object image region 301, the processor 120 may identify, using the segmentation unit 201, a shape of the object image region 301 selected by the user.

According to an embodiment, when the user of the electronic device 101 selects the object image region 301 (e.g., the specific object) included in the first image 310 in order to delete the object image region 301 included in the first image 310, the processor 120 may identify, using the segmentation unit 201, an outline or boundary of the object image region 301 selected by the user.

Referring to FIG. 5A, by using the mask region configuration unit 203, the processor 120 may generate the mask region 305 related to the outline (e.g., shape) of the object image region 301 (e.g., the specific object) identified through the segmentation unit 201. For example, the mask region 305 generated through the mask region configuration unit 203 may include a plurality of first points 510 included in inner and outer corners of edges.

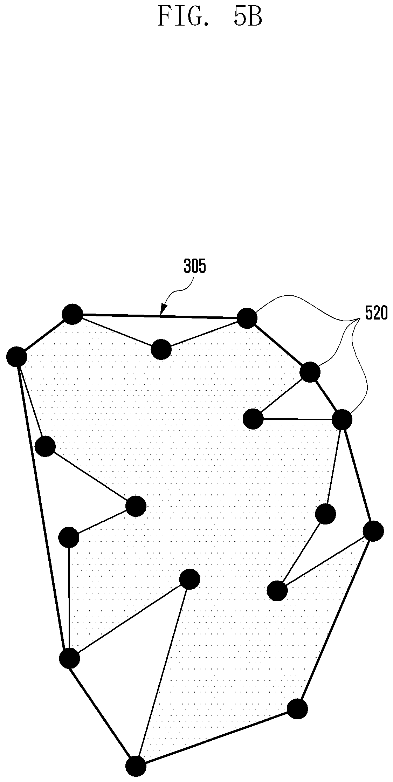

Referring to FIG. 5B, the processor 120 may recognize a plurality of second points 520 located on the outermost side in the mask region 305 including the plurality of first points 510, as points for transforming the same to a polygonal shape (e.g., a shape having a plurality of outlines) by using the transformation unit 205. For example, the processor 120 may generate the mask region 315 transformed to a polygonal shape (e.g., an outline) by using the plurality of second points 520 located on the outermost side in the mask region 305 including the plurality of first points 510.

Referring to FIG. 5C, by using the transformation unit 205, the processor 120 may connect the plurality of second points 520 and may transform the mask region 305 to the polygonal shape 530. For example, the polygonal shape 530 may include an outline or a boundary obtained by connecting the plurality of second points 520 located on the outermost side in the mask region 305 including the plurality of first points 510.

According to an embodiment, the processor 120 may connect the plurality of second points 520 located on the outermost side of the generated mask region 305, and generate the transformed mask region 315. For example, the transformed mask region 315 may include the polygonal shape 530 (e.g., an outline of a polygon). For example, the mask region 315 transformed to the polygonal shape 530 may include an outline (e.g., shape) having no inner angle of more than approximately 180°. For example, the polygon may include an outline or a boundary having a plurality of vertices.

According to an embodiment, when the plurality of second points 520 located on the outermost side of the generated mask region 305 is connected, the generated mask region 305 is changed to the transformed mask region 315 including the polygon shape 530 (e.g., a polygonal outline). However, the disclosure is not limited thereto, and the mask region 305 may be transformed to have various outlines or boundaries such as a substantially convex polygonal shape, a semi-circular shape, or a circular shape. For example, when the generated mask region 305 is transformed to the transformed mask region 315 including the polygonal shape 530, the generative AI 200 may be incapable of estimating or predicting the shape of the object image region 301. For example, when the generative AI 200 is incapable of estimating or predicting the outline (e.g., shape) of the object image region 301, the generative AI 200 may not generate another image that the user does not want in the region where the object image region 301 is deleted.

FIG. 6 is a diagram schematically illustrating an embodiment in which an electronic device generates an irregular-sized hole around a mask region according to an embodiment of the disclosure.

According to an embodiment, when a user of the electronic device 101 selects the object image region 301 included in the first image 310 to delete the object image region 301, the processor 120 may identify, by using the segmentation unit 201, an outline (e.g., shape) of the object image region 301 selected by the user.

According to an embodiment, by using the mask region configuration unit 203, the processor 120 may generate the mask region 305 related to the object image region 301 identified by the segmentation unit 201. For example, the processor 120 may generate the mask region 305 related to the outline (e.g., shape) of the object image region 301 identified through the segmentation unit 201 by using the mask region configuration unit 203.

According to an embodiment, the processor 120 may transform the mask region 305 generated through the mask region configuration unit 203 by using the transformation unit 205. For example, by using the transformation unit 205, the processor 120 may generate at least one irregular-sized hole 610 around the mask region 305 generated through the mask region configuration unit 203 and generate the transformed mask region 315. For example, the irregular-sized hole 610 may be formed in at least one position that prevents the generative AI 200 from estimating or predicting the mask region 305 generated through the mask region configuration unit 203. For example, when the transformed mask region 315 including the at least one irregular-sized hole 610 around the mask region 305 is generated, the generative AI 200 may be incapable of estimating or predicting a shape of the object image region 301. For example, when the generative AI 200 is incapable of estimating or predicting the shape of the object image region 301, the generative AI 200 may not generate a new image that the user does not want in the region where the object image region 301 is deleted.

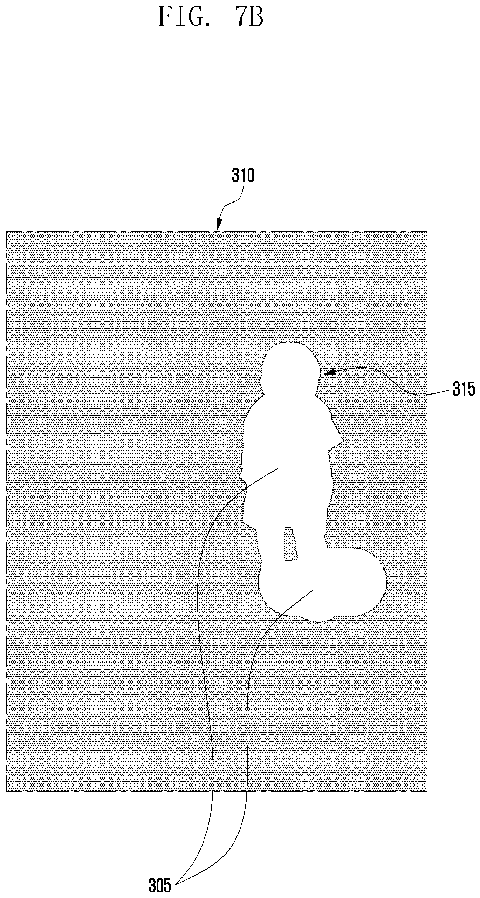

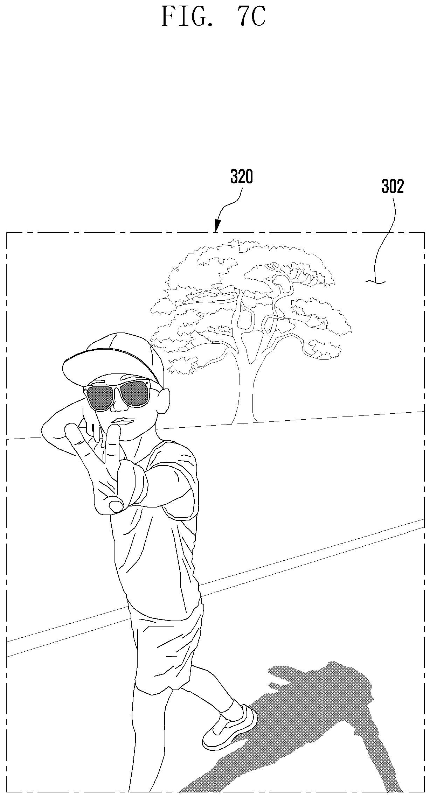

FIG. 7A is a diagram schematically illustrating a first image including an object image region and a shadow image region displayed through a display of an electronic device according to an embodiment of the disclosure. FIG. 7B is a diagram schematically illustrating a mask region generated by including an object image region and a shadow image region in a first image of an electronic device according to an embodiment of the disclosure. FIG. 7C is a diagram schematically illustrating a second image, in which an object image region and a shadow image region are deleted from a first image of an electronic device and a background image region is filled in, according to an embodiment of the disclosure.

Referring to FIG. 7A, the electronic device 101 may display the first image 310 stored in the memory 130 on the display 260, based on an input signal from a user. For example, the first image 310 may include the object image region 301, a shadow image region 710, and/or the background image region 302.

According to an embodiment, FIG. 7A may be a screen in which an execution screen of a specific application (e.g., gallery or photo editor) selected by the user to edit the first image 310 is displayed on the display 260.

According to an embodiment, the processor 120 may receive a user input related to selection of the object image region 301 and/or the shadow image region 710 included in the first image 310. For example, the user of the electronic device 101 may select the object image region 301 and/or the shadow image region 710 in the first image 310 by using a finger or a stylus pen in order to delete the object image region 301 and/or the shadow image region 710. For example, the user input may include a touch or press (e.g., long press) with respect to the object image region 301 and/or the shadow image region 710 in the first image 310. For example, the user input may include an input by a stylus pen with respect to the object image region 301 and/or the shadow image region 710 in the first image 310. For example, by using the segmentation unit 201, the processor 120 may identify an outline (e.g., shape) of the object image region 301 and/or shadow image region 710 selected by the user.

Referring to FIG. 7B, by using the mask region configuration unit 203, the processor 120 may generate the mask region 305 related to the outline (e.g., shape) of the object image region 301 and/or the shadow image region 710 identified through the segmentation unit 201. For example, by using the transformation unit 205, the processor 120 may transform the mask region 305 generated through the mask region configuration unit 203 to have a different outline (e.g., shape or boundary).

According to an embodiment, by using the transformation unit 205, the processor 120 may form the mask region 315 by transforming the size of the mask region 305 generated through the mask region configuration unit 203 to be expanded beyond the object image region 301 and/or the shadow image region 710. For example, the processor 120 may generate the mask region 315 by transforming the size of the mask region 305, generated through the mask region configuration unit 203, to be expanded beyond the object image region 301 and/or the shadow image region 710, by using the transformation unit 205, thereby preventing the generative AI 200 from estimating or predicting a shape of the object image region 301 and/or the shadow image region 710.

According to an embodiment, the processor 120 may transfer, to the generative AI 200, information related to the first image 310 including the mask region 315 transformed through the transformation unit 205.

Referring to FIG. 7C, the generative AI 200 may generate the second image 320 in which the object image region 301 and/or the shadow image region 710 is deleted from the first image 310, based on information that is related to the first image 310 including the mask region 315 transformed through the transformation unit 205 and is transferred through the processor 120.

According to an embodiment, the generative AI 200 may fill the region in which the object image region 301 and/or the shadow image region 710 is deleted with at least a portion of the background image region 302. For example, the generative AI 200 may overlap the region in which the object image region 301 and/or the shadow image region 710 is deleted with at least a portion of the background image region 302. For example, the generative AI 200 may fill the mask region 315 transformed through the transformation unit 205 with at least a portion of the background image region 302. For example, the generative AI 200 may replace the region in which the object image region 301 and/or the shadow image region 710 is deleted or the transformed mask region 315 with at least a portion of the background image region 302. For example, the second image 320 generated through the generative AI 200 may be transferred to the processor 120. The processor 120 may display the second image 320 by using the display 260. For example, the processor 120 may delete the object image region 301 and/or the shadow image region 710 from the first image 310 to acquire the second image 320 desired by the user of the electronic device 101.

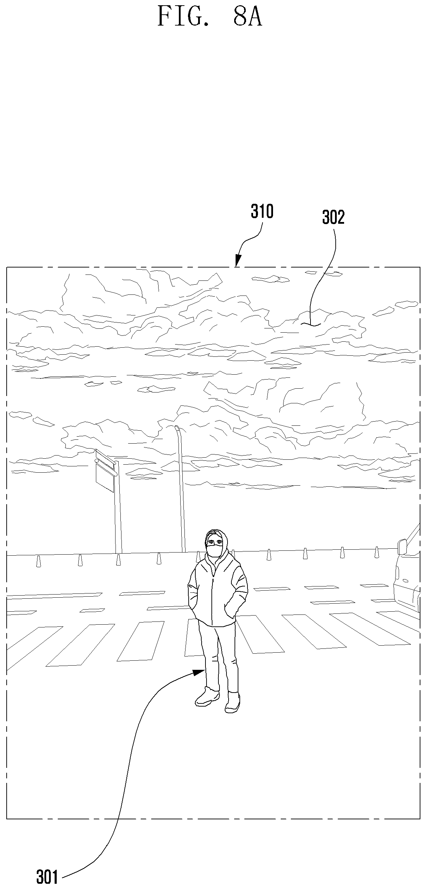

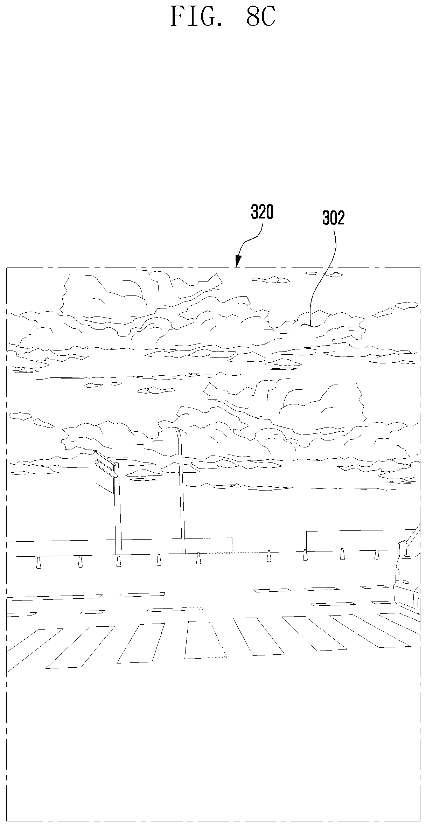

FIG. 8A is a diagram schematically illustrating a first image including an object image region and a background image region displayed through a display of an electronic device according to an embodiment of the disclosure. FIG. 8B is a diagram schematically illustrating a mask region and an anchor point generated with respect to an object image region in a first image of an electronic device according to an embodiment of the disclosure. FIG. 8C is a diagram schematically illustrating a second image, in which an object image region is deleted from a first image of an electronic device and a background image region is included, according to an embodiment of the disclosure.

Referring to FIG. 8A, the electronic device 101 may display the first image 310 stored in the memory 130 on the display 260, based on an input signal from a user. For example, the first image 310 may include the object image region 301 and/or the background image region 302.

According to an embodiment, FIG. 8A may be a screen in which an execution screen of a specific application (e.g., gallery or photo editor), selected by the user to edit the first image 310, is displayed through the display 260.

According to an embodiment, the processor 120 may receive a user input related to selection of the object image region 301 (e.g., a specific object such as a human shape) included in the first image 310. For example, the user of the electronic device 101 may select the object image region 301 by using a finger or a stylus pen to delete the object image region 301 in the first image 310. For example, the user input may include a touch or press (e.g., long press) with respect to the object image region 301 in the first image 310. For example, the user input may include a stylus pen input with regard to the object image region 301 in the first image 310. For example, by using the segmentation unit 201, the processor 120 may identify an outline (e.g., shape) of the object image region 301 selected by the user.

Referring to FIG. 8B, by using the mask region configuration unit 203, the processor 120 may generate the mask region 305 related to the object image region 301 identified through the segmentation unit 201. For example, by using the transformation unit 205, the processor 120 may transform the mask region 305 generated through the mask region configuration unit 203 to have a different outline (e.g., shape) and generate the transformed mask region 315.

According to an embodiment, by using the transformation unit 205, the processor 120 may form (e.g., generate) at least one anchor point 810 in the mask region 305 generated through the mask region configuration unit 203 and generate the transformed mask region 315. The anchor point 810 may include a hole or a punching. For example, by using the transformation unit 205, the processor 120 may form (e.g., generate) at least one anchor point 810 in the mask region 305 generated through the mask region configuration unit 203 and generate the transformed mask region 315 including the at least one anchor point 810 formed in the generated mask region 305, thereby preventing the generative AI 200 from estimating or predicting the object image region 301.

According to an embodiment, the processor 120 may transfer, to the generative artificial intelligence 200, information related to the first image 310 including the mask region 315 transformed through the transformation unit 205.

Referring to FIG. 8C, the generative AI 200 may generate the second image 320 in which the object image region 301 is deleted from the first image 310, based on information that is related to the first image 310 including the mask region 315 transformed through the transformation unit 205 and is transferred through the processor 120.

According to an embodiment, the generative AI 200 may fill the region in which the object image region 301 is deleted with at least a portion of the background image region 302. For example, the generative artificial intelligence 200 may fill or overlap the mask region 315, transformed through the transformation unit 205, with at least a portion of the background image region 302. For example, the generative AI 200 may replace the region in which the object image region 301 is deleted or the transformed mask region 315 with at least a portion of the background image region 302. For example, the second image 320 may include the background image region 302 from which the object image region 301 is deleted. The second image 320 generated through the generative AI 200 may be transferred to the processor 120. The processor 120 may display the second image 320 by using the display 260. For example, the processor 120 may obtain the second image 320 in which the object image region 301 is deleted from the first image 310, and only the background image region 302 desired by the user of the electronic device 101 is displayed.

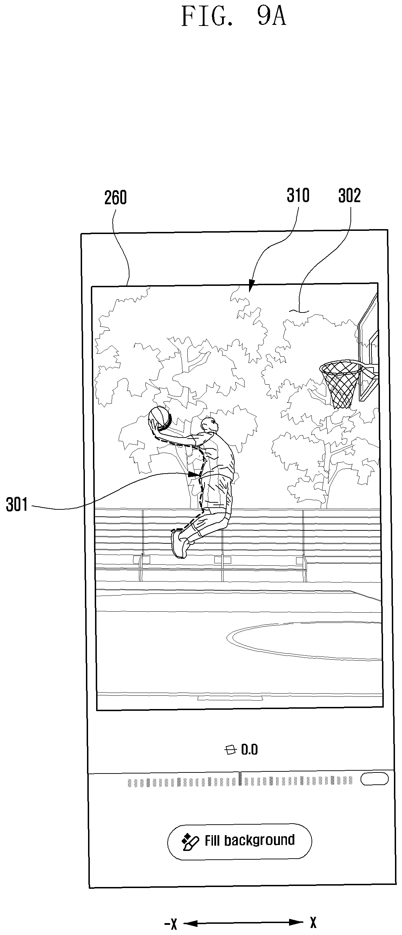

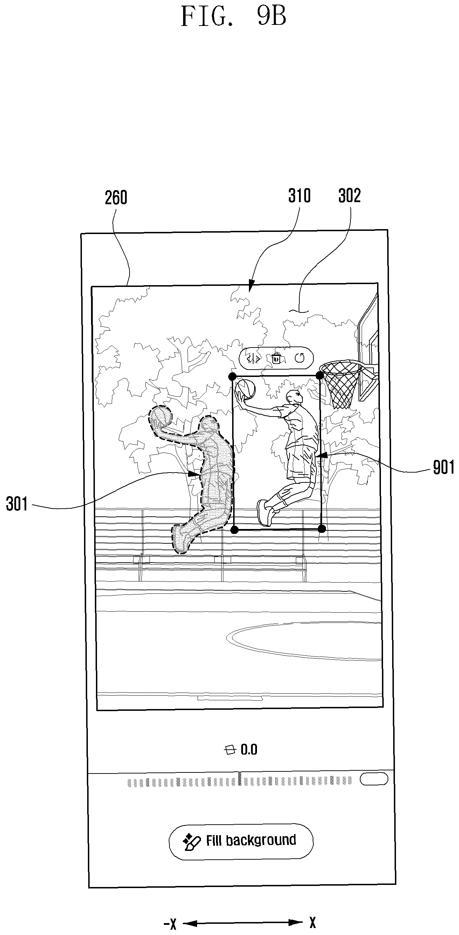

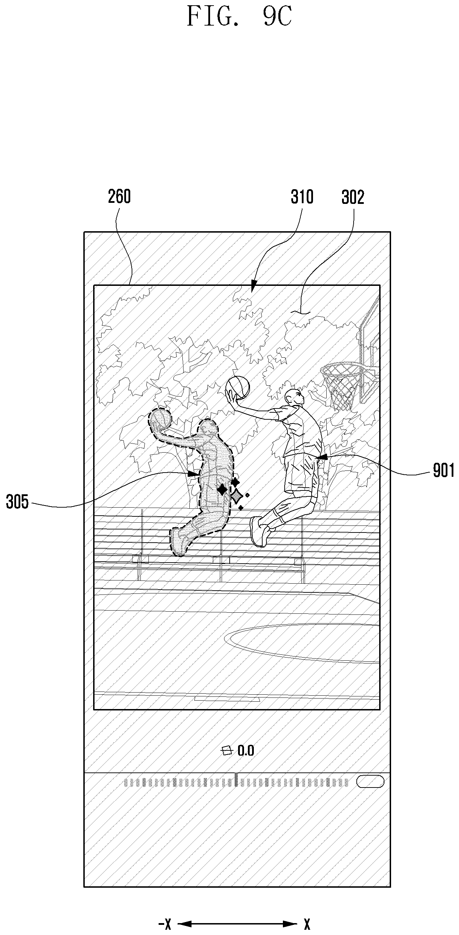

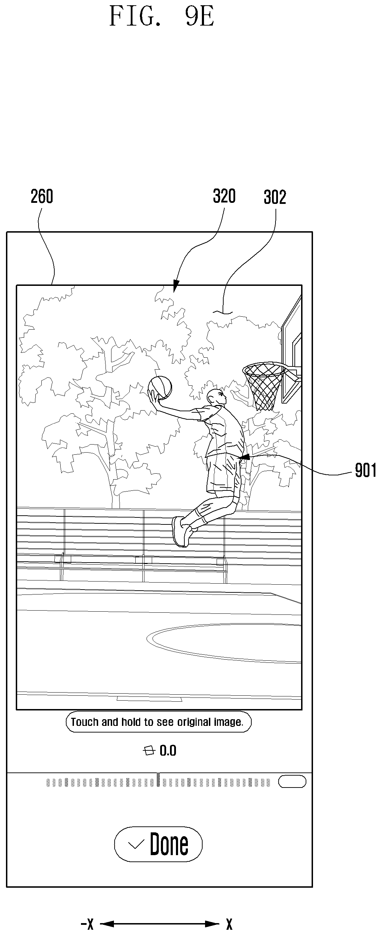

FIG. 9A is a diagram schematically illustrating a first image displayed through a display of an electronic device according to an embodiment of the disclosure. FIG. 9B is a diagram schematically illustrating an embodiment in which an object image region is moved in a first image of an electronic device according to an embodiment of the disclosure. FIG. 9C is a diagram schematically illustrating a mask region generated with regard to an object image region in a first image of an electronic device according to an embodiment of the disclosure. FIG. 9D is a diagram schematically illustrating an embodiment in which a mask region generated in relation to an object image region in a first image of an electronic device is transformed to a polygonal shape according to an embodiment of the disclosure. FIG. 9E is a diagram schematically illustrating an embodiment in which an object image region is deleted in a first image of an electronic device and the object image region is moved, according to an embodiment of the disclosure.

Referring to FIG. 9A, the electronic device 101 may display the first image 310 stored in the memory 130 on the display 260, based on an input signal from a user. For example, the first image 310 may include the object image region 301 and/or the background image region 302. For example, the object image region 301 (e.g., a specific object) may be located in a first direction (e.g., - X-axis direction) of the first image 310.

According to an embodiment, FIG. 9A may be a screen in which an execution screen of a specific application (e.g., gallery or photo editor), selected by the user to edit the first image 310, is displayed through the display 260.

According to an embodiment, the processor 120 may receive a user input related to selection and movement of the object image region 301 included in the first image 310. For example, the user of the electronic device 101 may select (e.g., touch or press) and drag the object image region 301 using a finger or a stylus pen in order to move the object image region 301 in a second direction (e.g., X-axis direction) and delete the same in in the first image 310. For example, the user input may include a touch, press (e.g., long press), or drag operation with respect to the object image region 301 in the first image 310. For example, the user input may include an input (e.g., touch and drag) by a stylus pen with regard to the object image region 301 in the first image 310.

Referring to FIG. 9B, the processor 120 may receive a user input (e.g., a touch and drag) for moving the object image region 301 in the first image 310 from the first direction (e.g., - X-axis direction) to the second direction (e.g., X-axis direction). For example, the processor 120 may move the object image region 301 from the first direction (e.g., - X-axis direction) to the second direction (e.g., X-axis direction), based on a user input (e.g., drag) for moving the object image region 301 from the first direction (e.g., - X-axis direction) to the second direction (e.g., X-axis direction). For example, an object 901 moved in the second direction (e.g., X-axis direction) may be located in the second direction (e.g., X-axis direction) of the display 260. For example, by using the segmentation unit 201, the processor 120 may identify an outline (e.g., shape) of the object image region 301 selected by the user.

Referring to FIG. 9C, by using the mask region configuration unit 203, the processor 120 may generate the mask region 305 related to the object image region 301 identified through the segmentation unit 201.

Referring to FIG. 9D, the processor 120 may transform the mask region 305, generated through the mask region configuration unit 203, to have a different outline (e.g., shape) by using the transformation unit 205. For example, by using the transformation unit 205, the processor 120 may transform the mask region 305, generated through the mask region configuration unit 203, to the polygonal shape 530. For example, the polygon shape 530 may include an outline or a boundary of a polygon. For example, the processor 120 may transform the mask region 305, generated through the mask region configuration unit 203, to the transformed mask region 315 including the polygonal shape 530 (e.g., an outline of a polygon) by using the transformation unit 205, thereby preventing the generative AI 200 from estimating or predicting the object image region 301.

According to an embodiment, the processor 120 may transfer information related to the first image 310 including the mask region 315 transformed through the transformation unit 205 to the generative AI 200.

Referring to FIG. 9E, the generative AI 200 may generate the second image 320 in which the object image region 301 is deleted in the first image 310 and the object 901 obtained by moving the object image region 301 in the second direction (e.g., X-axis direction) is included, based on the information that is related to the first image 310 including the mask region 315 transformed through the transformation unit 205 and is transferred through the processor 120.

According to an embodiment, the generative AI 200 may transfer, to the processor 120, the second image 320, in which the region in which the object image region 301 is deleted is filled with at least a portion of the background image region 302 and the object 901 obtained by moving the object image region 301 in the second direction (e.g., X-axis direction) is included. The processor 120 may display the second image 320 using the display 260.

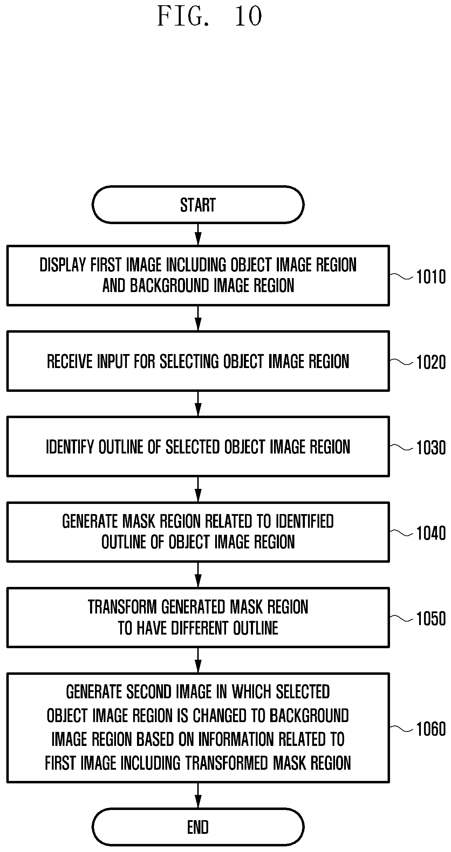

FIG. 10 is a flowchart schematically illustrating a method of processing an image using an electronic device according to an embodiment of the disclosure.

The method described below may include, for example, the embodiments illustrated in FIG. 1A to FIG. 9E. The method disclosed below may be applied to the embodiments illustrated in FIG. 2 to FIG. 9E, for example. For example, the method disclosed below is not limited to the following operations, and may perform operations associated with at least some of the embodiments described in FIGS. 2 to 9E. In the embodiment related to the method disclosed below, the operations may be performed in sequence, but may not necessarily be performed in sequence. For example, the order of the operations may be changed. For example, the operations may be performed in parallel. For example, all of the operations may not be performed, and at least some of the operations may be performed. The operations described below may be performed by the processor 120 and/or the memory 130 of the electronic device 101.

According to an embodiment, the electronic device 101 may display the first image 310 stored in the memory 130 through the display 260, based on an input signal (e.g., selection) from a user. For example, the user of the electronic device 101 may execute a specific application (e.g., gallery or photo editor) and edit the first image 310.

In operation 1010, based on an input signal of a user, the processor 120 may display the first image 310 including the object image region 301 and the background image region 302 through a user interface.

According to an embodiment, based on an input signal from the user, the processor 120 may display the first image 310 including the object image region 301 and the background image region 302 through the display 260.

In operation 1020, while the first image 310 is displayed through the display device 260 (e.g., user interface), the processor 120 may receive an input (e.g., a selection signal) for selecting the object image region 301 included in the first image 310.

In operation 1030, based on the input, the processor 120 may identify an outline (e.g., shape) of the selected object image region 301 by using the segmentation unit 201.

In operation 1040, the processor 120 may generate the mask region 305 related to the identified outline of the object image region 301 by using the mask region configuration unit 203.

In operation 1050, the processor 120 may transform the mask region 305 generated through the mask region configuration unit 203 so as to have a different outline (e.g., shape) by using the transformation unit 205.

In operation 1060, the processor 120 may generate the second image 302 in which the selected object image region 301 is changed to the background image region 302 through the generative AI 200, based on information related to the first image 310 including the mask region 315 transformed through the transformation unit 205.

According to an embodiment, the processor 120 may display the second image 320 transferred through the generative AI 200 on the display 260.

The electronic device 101 according to an embodiment of the disclosure may include the display 260, at least one processor 120, and the memory 130 including one or more storage media for storing instructions. According to an embodiment, the instructions, when executed individually or collectively by the at least one processor 120, may cause the electronic device 101 to display the first image 310 including the object image region 301 (e.g., a specific object) and the background image region 302 through a user interface, to receive an input for selecting the object image region 301 included in the first image 310 while the first image 310 is displayed, to identify an outline of the selected object image region 301 based on the input, to generate the mask region 305 related to the identified outline of the object image region 301, to transform the generated mask region 305 to have a different outline (e.g., shape), and to generate, through the generative artificial intelligence 200, the second image 320 in which the selected object image region 301 is changed to the background image region 302, based on information related to the first image 310 including the transformed mask region 315.

According to an embodiment, the generated mask region 305 may include a region expanded beyond the selected object image region 301.

According to an embodiment, the transformed mask region 315 may include the irregular-sized hole 610.

According to an embodiment, the instructions, when executed individually or collectively by the at least one processor 120, may cause the electronic device 101 to identify whether the selected object image region 301 includes the shadow image region 710, and when the selected object image region 301 includes the shadow image region 710, to transform the selected object image region 301 and the shadow image region 710 to have different outlines.

According to an embodiment, the generative AI 200 may be included in the electronic device 101.

According to an embodiment, the generative AI 200 may be included in the server 108.

According to an embodiment, the transformed mask region 315 may include a region transformed to the polygonal shape 530.

According to an embodiment, the transformed mask region 315 may include the anchor point 810 formed in the generated mask region 305.

According to an embodiment, the instructions, when individually or collectively executed by the at least one processor 120, may cause the electronic device 101 to, based on information related to the first image 310 including the transformed mask region 315, delete the selected object image region 301 through the generative AI 200, and fill the deleted object image region 301 with the background image region 302.

According to an embodiment, the instructions, when individually or collectively executed by the at least one processor 120, may cause the electronic device 101 to prevent the generative AI 200 from estimating the transformed mask region 315.

A method of processing an image using the electronic device 101 according to an embodiment of the disclosure may include an operation of displaying the first image 310 including the object image region 301 and the background image region 302 through a user interface. According to an embodiment, the method may include an operation of receiving an input for selecting the object image region 301 included in the first image 310 while the first image 310 is displayed. According to an embodiment, the method may include an operation of identifying, based on the input, an outline of the selected object image region 301. According to an embodiment, the method may include an operation of generating the mask region 305 related to the identified outline of the object image region 301. According to an embodiment, the method may include an operation of transforming the generated mask region 305 to have a different outline. According to an embodiment, the method may include an operation of generating, through the generative AI 200, the second image 320 in which the selected object image region 301 is changed to the background image region 302, based on information related to the first image 310 including the transformed mask region 315.

According to an embodiment, the generated mask region 305 may include a region expanded beyond the selected object image region 301.

According to an embodiment, the transformed mask region 315 may include the irregular-sized hole 610.

According to an embodiment, the method may further include an operation of identifying whether the selected object image region 301 includes the shadow image region 710; and, when the object image region 301 includes the shadow image region 710, an operation of transforming the selected object image region 301 and the shadow image region 710 to have different outlines.

According to an embodiment, the generative AI 200 may be included in the electronic device 101.

According to an embodiment, the generative AI 200 may be included in the server 108.

According to an embodiment, the transformed mask region 315 may include a region transformed to the polygonal shape 530.

According to an embodiment, the transformed mask region 315 may include the anchor point 810 formed in the generated mask region 305.

According to an embodiment, the method may further include an operation of deleting the object image region 301, through the generative AI 200, based on information related to the first image 310 including the transformed mask region 315, and filling the deleted object image region 301 with the background image region 302.

According to an embodiment, the method may further include an operation of preventing the generative AI 200 from estimating the transformed mask region 315.

Although the present disclosure has been described in detail with reference to the above-described embodiments, it will be apparent to those skilled in the art that various changes and modifications of the disclosure may be made without departing from the scope of the disclosure.

## Claims

1. An electronic device (101), comprising:
a display (260);
at least one processor (120); and
memory (130) including one or more storage media storing instructions,
wherein the instructions, when executed by the at least one processor (120) individually or collectively, cause the electronic device (101) to:
display a first image (310) including an object image region (301) and a background image region (302) through a user interface;
while the first image (310) is displayed, receive an input for selecting the object image region (301) included in the first image (310);
based on the input, identify an outline of the selected object image region (301);
generate a mask region (305) related to the identified outline of the object image region (301);
transform the generated mask region (305) to have a different outline; and
based on information related to the first image (310) including the transformed mask region (315), generate, through a generative artificial intelligence (200), a second image (320) in which the selected object image region (301) is changed to the background image region (302).

2. The electronic device of claim 1, wherein the generated mask region (305) includes a region expanded beyond the selected object image region (301).

3. The electronic device of claim 1 or claim 2, wherein the transformed mask region (315) includes an irregular-sized hole (610).

4. The electronic device of any one of claims 1 to 3, wherein the instructions, when executed by the at least one processor (120) individually or collectively, cause the electronic device (101) to:
identify whether the selected object image region (301) includes a shadow image region (710); and
in case that the selected object image region (301) includes the shadow image region (710), transform the selected object image region (301) and the shadow image region (710) to have a different outline.

5. The electronic device of any one of claims 1 to 4, wherein the generative artificial intelligence (200) is included in the electronic device (101).

6. The electronic device of any one of claims 1 to 4, wherein the generative artificial intelligence (200) is included in a server (108).

7. The electronic device of claim 1 or claim 2, wherein the transformed mask region (315) includes a region transformed into a polygonal shape (530).

8. The electronic device of claim 1 or claim 2, wherein the transformed mask region (315) includes an anchor point (810) formed in the generated mask region (305).

9. The electronic device of claim 1, wherein the instructions, when executed by the at least one processor (120) individually or collectively, cause the electronic device (101) to:
based on the information related to the first image (310) including the transformed mask region (315), delete the selected object image region (301) through the generative artificial intelligence (200); and
fill the deleted object image region (301) with the background image region (302).

10. The electronic device of any one of claims 1 to 9, wherein the instructions, when executed by the at least one processor (120) individually or collectively, cause the electronic device (101) to prevent the generative artificial intelligence (200) from estimating the transformed mask region (315).

11. A method of processing an image by using an electronic device (101), the method comprising:
displaying a first image (310) including an object image region (301) and a background image region (302) through a user interface;
while the first image (310) is displayed, receiving an input for selecting the object image region (301) included in the first image (310);
based on the input, identifying an outline of the selected object image region (301);
generating a mask region (305) related to the identified outline of the object image region (301);
transforming the generated mask region (305) to have a different outline; and
based on information related to the first image (310) including the transformed mask region (315), generating, through the generative artificial intelligence (200), a second image (320) in which the selected object image region (301) is changed to the background image region (302).

12. The method of claim 11, wherein the generated mask region (305) includes a region expanded beyond the selected object image region (301); and
wherein the transformed mask region (315) includes an irregular-sized hole (610).

13. The method of claim 11 or claim 12, comprising:
identifying whether the selected object image region (301) includes a shadow image region (710); and
in case that the selected object image region (301) includes the shadow image region (710), transforming the selected object image region (301) and the shadow image region (710) to have a different outline.

14. The method of any one of claims 11 to 13, wherein the generative artificial intelligence (200) is included in the electronic device (101) or a server (108).

15. The method of claim 11, further comprising:
based on the information related to the first image (310) including the transformed mask region (315), deleting the selected object image region (301) through the generative artificial intelligence (200); and
filling the deleted object image region (301) with the background image region (302).
